# EUROPEAN PATENT APPLICATION

(11) **EP 3 299 954 A1**
(43) Date of publication of application: **28.03.2018**
(21) Application number: 15893972.8
(22) Date of filing: 20.11.2015
(51) Int. Cl.: G06F 9/44, G06F 13/38

(54) **METHOD FOR COMMUNICATING BETWEEN VIEWS IN ANDROID SYSTEM**

(30) Priority: 02.06.2015 CN 201510296509
(71) Applicant: Shanghai Feixun Communication Co., Ltd., Shanghai 201616 (CN)
(72) Inventor: TIAN, Zefeng, Shanghai 200050 (CN)
(74) Representative: Sun, Yiming
(86) International application number: PCT/CN2015/095215
(87) International publication number: WO 2016/192328

(57) **Abstract**

The present disclosure provides a method for communication between Views in an Android system, comprising: 1) defining a View message ID for a corresponding View, and structuring a View message in the form of View ID carrying relevant data; 2) setting up a hash table corresponding with View messages and the View entities, and registering View messages into the View ; and when the View is removed from an interface, revoking all View messages registered by the View from the hash table;3) creating a Handler thread to handle View messages. The method for communication between Views in an Android system of the present disclosure reduces Activity complexity and redundancy and effectively enhances the development and expansion of View functions while not affecting the control of Activities over Views.

## Description

### TECHNICAL FIELD

The present disclosure relates to the field of communication technology, in particular, to a method for communication between Views in an Android system.

### BACKGROUND

In an Android system, View components handle the display and touch screen issues. In addition, screen click events are also handled by Views. The Activity, as a View container, manages the View and are responsible for the layout, creation, removal and other lifetime-related operations. When a component such as Activity, Service or Broadcast receives a relevant driver message, display of the View will be updated.

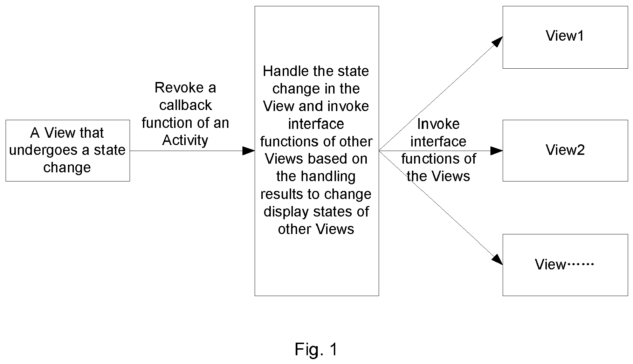

During the operation of an interface, when a View experiences a change in its display status in response to clicking by the user or various system changes, it is necessary for the View to inform the manager Activity so that the Activity can perform associated operation. To this end, the Android system defines a set of callback functions for View components. When Views are created, the Activities may set these callback functions. As shown in Figure 1, in order to achieve good display results, when a change occurs in a relevant status of a View in an interface, occurrence of changes in the display status of other Views is also necessary. To achieve this, it is necessary to set a callback function for the View by its Activity. Upon a change occurring in the status of the View, the callback function set by the Activity will be invoked. After that, the Activity invokes interface functions of other Views based on current conditions in order to update the related status of the other Views.

However, the above method has the following drawbacks:
(1) No channels are provided for direct communication between Views, and a single View must interact with the Activity where it is, which then interacts with other Views. As such, the whole process is under the control of the Activity, which increases Activity complexity.
(2) Many operations performed by Activities are the same across Views. Repetitive performance of these operations by the individual Activities leads to increased Activity redundancy.

Therefore, if communication channels are established between Views, the transferring operations of the Activities will lead to increased Activity complexity and redundancy, which is unnecessary, and development and expansion of View functions will be enhanced. However, the existing technology does not support communication mechanisms between Views, and leave individual Views completely isolated from each other. Thus, how to provide a mechanism for communication and communication between Views is the next focus of research efforts.

### SUMMARY

Embodiments of the present disclosure provide a method for communication between Views in an Android system in which View message IDs are used to distinguish operations to be performed between the Views, Handler threads are employed for management and distribution of messages without impact on the operation of Android UI threads, and Activities are allowed to handle and block View messages based on current operating conditions so that on the basis of the Activity complexity and redundancy relieving to enrich the View function development and expansion without the effects on the control of the View by Activity.

In order to achieve the above object and other related objects, the present disclosure provides a method for communication between Views in an Android system, including: 1) defining a View message ID for a corresponding View, and structuring a View message in the form of View ID carrying relevant data;2) setting up a hash table corresponding with View messages and the View entities, and registering View messages into the View ; and when the View is removed from an interface, revoking all View messages registered by the View from the hash table; 3) creating a Handler thread to handle View messages. The method for communication between Views in an Android system according to the above description, wherein the relevant data comprises View status change information.

The method for communication between Views in an Android system according to the above description, wherein the View Message ID is int type. The method for communication between Views in an Android system according to the above description, wherein data packets corresponding to the View Messages are Intent data structure of the Android system.

The method for communication between Views in an Android system according to the above description, wherein in 2), registering View messages View messages into the View includes the following steps: Step S31: sequentially reading one View message from a View message list of the View;
Step S32: determining whether the read View message is empty, if so, completing the registration and ending the process, and if not, proceeding to Step S33;
Step S33: searching for the hash table registered with the View message according to the View message ID;
Step S34: determining whether other Views are registered with the View message, if so, proceeding to Step S35, and if not, proceeding to Step S36;Step S35: directly adding the View into a View list corresponding to the View message in the hash table and proceeding to Step S31;
Step S36: creating a View message ID and a corresponding View list in the hash table;
Step S37: adding the View to the newly created View list into the hash table and proceeding to Step S31.

The method for communication between Views in an Android system according to the above description, wherein in 2), revoking the View messages registered by the View from the hash table includes the following steps:
Step S41: sequentially reading one View message from the View message list for the View;
Step S42: determining whether the read View message is empty, if so, completing the revocation and ending the process, and if not, performing Step S43;
Step S43: searching for the hash table that the View message is registered according to the View message ID;
Step S44: reading a View list corresponding to the View message from the hash table;
Step S45: deleting the View to be revoked from the View list and performing Step S41.

The method for communication between Views in an Android system according to the above description, wherein the Handler thread operates in a View message-driven manner, the Handler thread starts to operate when a View undergoes a status change and sends out a View message.

The method for communication between Views in an Android system according to the above description, wherein in 3), the Handler thread includes the following steps:
Step S51: reading a View message ID from a View message list;
Step S52: forwarding the View message to an Activity for pre-processing;
Step S53: if the Activity does not allow to handle the View message, no operation is performed and ending the process, and otherwise, proceeding to Step S54;
Step S54: searching for the hash table that the View message is registered according to the View message ID;
Step S55: determining whether a View registered with the View message exists, if not, no operation is performed and ending the process, and otherwise, performing Step S56;
Step S56: reading a View list corresponding to the View message;
Step S57: sequentially calling a View message handler corresponding to each View entity. The method for communication between Views in an Android system according to the above description, wherein when no View message is received, the Handler thread enters a sleep status.

The method for communication between Views in an Android system according to the above description, wherein the View messages are all defined in an Intent.java file in the Android system.

As mentioned above, the method for communication between Views in an Android system of the present disclosure shows the following benefits:
(1) reducing Activity complexity and redundancy;
(2) effectively enhancing the development and expansion of View functions;
(3) not affecting the control of Activities over Views.

### BRIEF DESCRIPTION OF THE DRAWINGS

Fig. 1 is a schematic illustrating communication between Views achieved by Activities in the prior art.
Fig. 2 is a schematic illustrating a method for communication between Views in an Android system of the present disclosure.
Fig. 3 shows a flowchart of a View message registration process of the present disclosure.
Fig. 4 shows a flowchart of a View message revocation process of the present disclosure.
Fig. 5 shows a flowchart of a process performed by a Handler thread of the present disclosure.

### DETAILED DESCRIPTION

The present disclosure will be described below by means of specific embodiments. Other advantages and effects of the disclosure will be readily understood by those skilled in the art from the disclosure herein. The present disclosure may also be implemented or utilized as other different specific embodiments, and various modifications or changes may be made to the details disclosed herein from different views and for different applications without departing from the spirit of the disclosure.

It is noted that the drawings presented in the following embodiments are intended merely to illustrate the basic concept of the present disclosure in a schematic manner and hence only show the components related hereto which are not drawn to their quantities, shapes and sizes in actual implementations where their configurations, quantities and scales may vary arbitrarily and their arrangements may also be more complex.

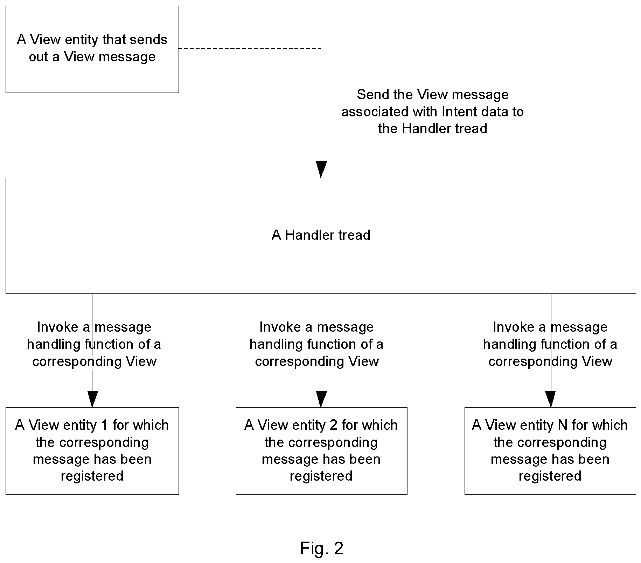

In order to create channels for communication between Views, as shown in Fig. 2, in a method for communication between Views in an Android system of the present disclosure, View message IDs corresponding to a set of Views are first defined. Packets corresponding to the View messages employ an Intent data structure in the Android system, unnecessary to define a new data structure. After Activities are established, it is needed to set up a hash table for correspondence between the View messages and the View entities. Afterward, a Handler thread is created to handle the View messages. When a View is created and added to an interface, it is necessary to register a View message list to be handled by the View to the Android system . When the system receives the registration request, it adds the View messages and the View entity registered with the View messages to the hash table. When a View is removed from the interface, it is necessary to revoke all the View messages registered for the View entity from the Android system. When the Android system receives the revocation request, it traverses the hash table to delete therefrom the View entity corresponding to the individual View messages. When the status of a View changes, a corresponding View message is sent to the Handlerthread. Upon receipt of the View message, the Handler firstly forwards it to an Activity for preprocessing. Subsequently, with the Activity permission, View list corresponding to the View message in the hash table is identified, followed by calling View message handling functions corresponding to each View entity, thereby completing the communication between the Views.

Specifically, the method for communication between Views in an Android system of the present disclosure includes:
(1) Defining a View message ID for a corresponding View, and structuring a View message in the form of View ID carrying relevant data.
   Specifically, the communication between the Views, whether the Views are inherent to the Android system or developed subsequently, is enabled by View message IDs. When it is necessary to notify other Views if each View status changes, a pre-defined View message ID is required and the View message in the form of View ID carrying relevant data is sent to the Android system. Wherein, the relevant data include View status change information.
   The View message ID employs an int type that is sufficient to meet the quantity requirements for View messages. Since it is possible for each View message to carry relevant data packed with the Intent data structure in the Android system, and it is unnecessary to redefine a new data structure. All View messages are defined in an Intent.java file of the Android system in order to be accessed by the View message IDs together with the relevant data.
   With MyView as an example, a View message ID is specifically defined, for example, as follows: 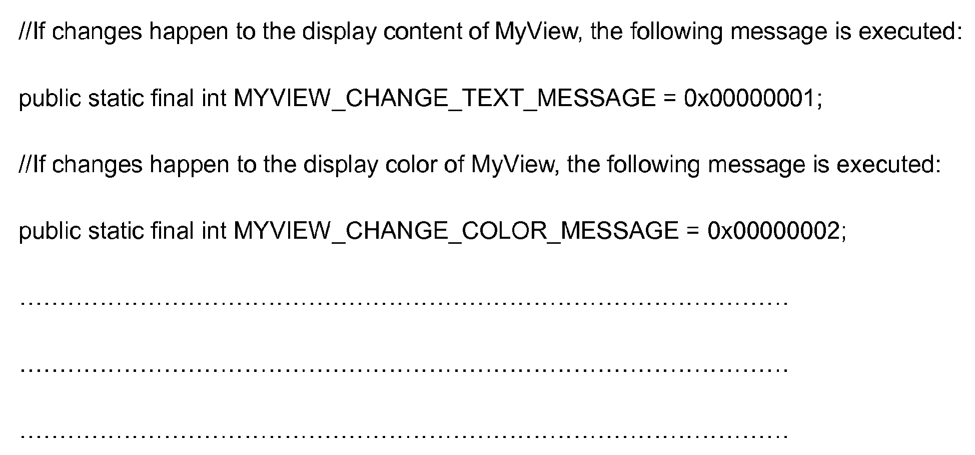
   The Intent data structure for each View message is defined according to specific circumstances. One View message may be handled by several Views.
(2) Setting up a hash table corresponding with View messages and View entities, and registering View messages into the View;, and when the View is removed from an interface, revoking all View messages registered by the View from the hash table; .Specifically, when a View is created in an interface and added thereto for display, it is necessary to register a plurality of View messages to be handled into the Android system . Meanwhile, the Android system allocates a hash table for corresponding View messages and View entities to each interface. When the View is removed from an interface, it is necessary to revoke all the View messages registered for the View entity from the Android system. When the Android system receives the revocation request, it traverses the hash table to delete therefrom the View entity corresponding to the individual View messages.

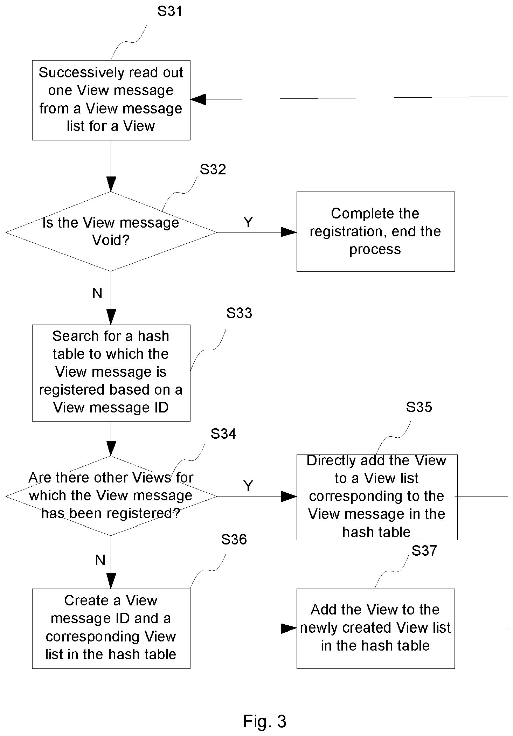

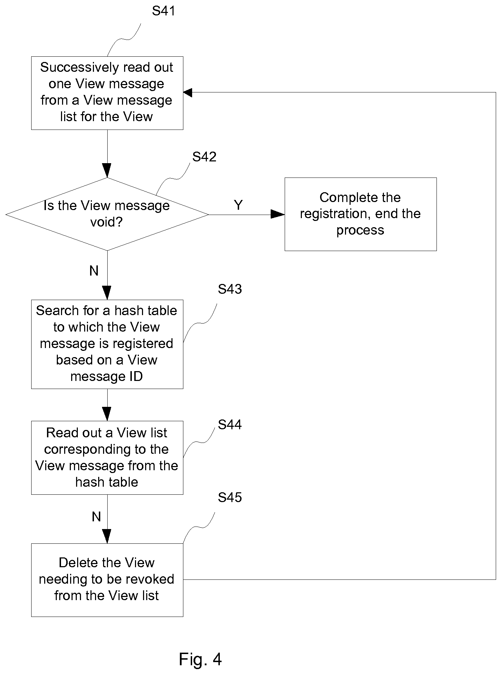

Referring to Fig. 3, a View message registration process is performed by a View message registration function corresponding to each interface and specifically includes the following steps:
Step S31: sequentially reading one View message from a View message list of the View;
Step S32: determining whether the read View message is empty, if so, completing the registration and ending the process, and if not, proceeding to Step S33;
Step S33: searching for the hash table registered with the View message according to the View message ID;
Step S34: determining whether other Views are registered with the View message, if so, proceeding to Step S35, and if not, proceeding to Step S36;
Step S35: directly adding the View into a View list corresponding to the View message in the hash table and proceeding to Step S31;
Step S36: creating a View message ID and a corresponding View list in the hash table;
Step S37: adding the View to the newly created View list into the hash table and proceeding to Step S31.Referring to Fig. 4, a View message revocation process is performed by a View message revocation function and specifically includes the following steps:
   Step S41: sequentially reading one View message from the View message list for the View;
   Step S42: determining whether the read View message is empty, if so, completing the revocation and ending the process, and if not, performing Step S43;
   Step S43: searching for the hash table that the View message is registered according to the View message ID;
   Step S44: reading a View list corresponding to the View message from the hash table;
   Step S45: deleting the View to be revoked from the View list and performing Step S41.
(3) Creating a Handler thread and handling the View messages by the Handler thread.

In the present disclosure, it is necessary to create a Handler thread. Because View handling processes belong to Android UI threads, the Handler thread is required to be responsible for handling and updating the entire interface without interruption. Otherwise, the screen may be stuck, which causes a poor user experience. Handling View messages by the Handler thread provided by the Android system allows the View in UI thread may continue to handle the UI issues after the View Message is sent out.

Specifically, handling of View messages is performed in a Handler thread corresponding to each interface. The Handler thread provides a View message array management mechanism. A View calls an obtainMessage function corresponding to the Handler thread to construct a Message entity and encapsulates a View message ID and packed relevant data into the Message entity. A sendMessage function corresponding to the Handler thread is called to send the View message to the Handler thread for processing.

The Android Handler thread operates in a View message-driven manner, the Handler thread starts the operation when the View status changes and sends the View Message. First of all, the View message is picked up from a View message list and is forwarded to an Activity for pre-processing. The Activity will determine whether the View message should go for processing according to current circumstances. That is, the Activity is capable of holding up all View messages in its interface according to current circumstances so as to achieve View component management ability performed by the Activity.

After Activity pre-processing, if it is determined that View is allowed to perform further operation according to current circumstance, a View list corresponding to the View message is read from a hash table, followed by calling of a View message handling function corresponding to each View entity. In case of a new View message sent out from a View during the handling of the View message, the Handler thread reads a View message array. If a new View message exists, the Handler thread continues the processing. Otherwise, the Handler thread enters a sleep status.

If the View message has not been registered for any View entity, the Handler thread will directly discard the View message.

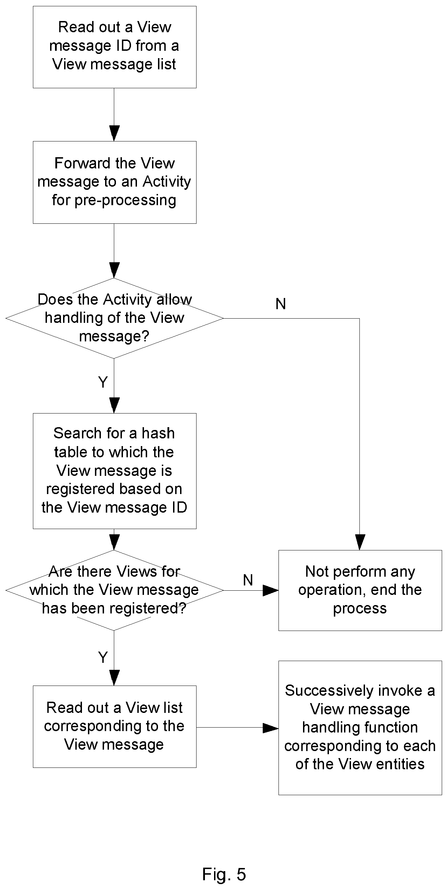

Referring to Fig. 5, a handling process performed by the Handler thread includes the following steps:
Step S51: reading a View message ID from a View message list;
Step S52: forwarding the View message to an Activity for pre-processing;
Step S53: if the Activity does not allow to handle the View message, no operation is performed and ending the process, and otherwise, proceeding to Step S54;
Step S54: searching for the hash table that the View message is registered according to the View message ID;
Step S55: determining whether a View registered with the View message exists, if not, no operation is performed and ending the process, and otherwise, performing Step S56;
Step S56: reading a View list corresponding to the View message;
Step S57: sequentially calling a View message handler corresponding to each View entity.

In summary, the method for communication between Views in an Android system reduces Activity complexity and redundancy and effectively enhances the development and expansion of View functions while not affecting the control of Activities over Views. Therefore, the present disclosure has effectively overcome the various drawbacks of the prior art and has a high value in industrial use.

The embodiments presented above merely explain the principles and effects of the present disclosure exemplarily and are not intended to limit the disclosure. Any person familiar with the art can make modifications or changes to the above embodiments without departing from the spirit and scope of the disclosure. Accordingly, all equivalent modifications or changes made by those of ordinary skill in the art without departing from the spirit and technical concept disclosed herein are intended to be embraced by the claims of the present disclosure.

## Claims

1. A method for communication between Views in an Android system, comprising:
1) defining a View message ID corresponding to a View, and structuring a View message in the form of View ID carrying relevant data;
2) setting up a hash table corresponding with View messages and View entities; registering the View messages into the View; and when the View is removed from an interface, revoking all View messages registered by the View from the hash table;
3) creating a Handler thread to handle View messages.

2. The method for communication between Views in an Android system according to claim 1, wherein the relevant data comprises View status change information.

3. The method for communication between Views in an Android system according to claim 1, wherein the View Message ID is int type.

4. The method for communication between Views in an Android system according to claim 1, wherein data packets corresponding to the View Messages are in Intent structure of Android system.

5. The method for communication between Views in an Android system according to claim 1, wherein in 2), registering the View messages into the View comprises:
Step S31: sequentially reading one View message from a View message list of the View;
Step S32: determining whether the read View message is empty; if yes, completing the registration and ending the process; or if not, proceeding to Step S33;
Step S33: searching for the hash table registered with the View message according to the View message ID;
Step S34: determining whether other Views are registered with the View message; if yes, proceeding to Step S35, and if not, proceeding to Step S36;
Step S35: directly adding the View into a View list corresponding to the View message in the hash table and proceeding to Step S31;
Step S36: creating a View message ID and a corresponding View list in the hash table; and
Step S37: adding the View into the newly created View list in the hash table and proceeding to Step S31.

6. The method for communication between Views in an Android system according to claim 1, wherein in 2), revoking all View messages registered by the View from the hash table comprises the following steps:
Step S41: sequentially reading one View message from the View message list of the View;
Step S42: determining whether the read View message is empty; if yes, completing the revocation and ending the process; or if not, proceeding to Step S43;
Step S43: searching for the hash table that the View message is registered according to the View message ID;
Step S44: reading a View list corresponding to the View message from the hash table;
Step S45: deleting the View to be revoked from the View list and proceeding to Step S41.

7. The method for communication between Views in an Android system according to claim 1, wherein the Handler thread operates in a View message-driven manner, the Handler thread starts to operate when the View undergoes a status change and sends out the View message.

8. The method for communication between Views in an Android system according to claim 1, wherein in 3), the Handler thread comprises the following steps:
Step S51: reading a View message ID from a View message list;
Step S52: forwarding the View message to an Activity for pre-processing;
Step S53: if the Activity does not allow to handle the View message, no operation is performed and ending the process; or otherwise, proceeding to Step S54;
Step S54: searching for the hash table that the View message is registered according to the View message ID;
Step S55: determining whether a View registered with the View message exists; if not, no operation is performed, ending the process, and proceeding to Step S56;
Step S56: reading a View list corresponding to the View message;
Step S57: sequentially calling a View message handler corresponding to each View entity.

9. The method for communication between Views in an Android system according to claim 1, wherein when no View message is received, the Handler thread enters a sleep status.

10. The method for communication between Views in an Android system according to claim 1, wherein the View messages are all defined in an Intent.java file in the Android system.
